# EUROPEAN PATENT SPECIFICATION

(11) **EP 1 320 448 B1**
(45) Date of publication and mention of the grant of the patent: **23.01.2008**
(21) Application number: 01958792.2
(22) Date of filing: 20.08.2001
(51) Int. Cl.: B25J 9/10, B25J 17/02, B25J 18/06

(54) **A MANIPULATOR TO MOVE AN OBJECT IN THE SPACE WITH AT LEAST THREE ARMS**
MANIPULATOR ZUR BEWEGUNG EINES GEGENSTANDES IM RAUM MIT MINDESTENS DREI ARMEN
MANIPULATEUR DOTE D'AU MOINS TROIS BRAS POUR DEPLACER UN OBJET DANS L'ESPACE

(30) Priority: 11.09.2000 SE 0003224
(43) Date of publication of application: 25.06.2003
(73) Proprietor: ABB AB, 721 83 Västerås (SE)
(72) Inventor: BROGARDH, Torgny, S-724 79 Västeras (SE)
(74) Representative: Dahlstrand, Björn
(86) International application number: PCT/SE2001/001770
(87) International publication number: WO 2002/022320

(56) References cited:
- WO-A1-99/58301
- US-A- 4 976 582
- US-A- 5 156 062
- US-A- 5 847 528

## Description

### TECHNICAL AREA

The present invention relates to an industrial robot comprising a manipulator and control equipment where the manipulator has a number of arms comprising link systems where the arms together support a moveable element. The present invention intends to directly or indirectly support a tool that can be used for the moving, measuring, treating, processing, etc. of objects. More specifically, the invention relates to a manipulator as defined in the preamble of claim 1. Such a manipulator is known eg from WO-A-9958301.

The invention further relates to a method for manufacturing such a manipulator and to a method for displacing a body in space by use of such a manipulator.

### BACKGROUND

A parallel robot comprises a manipulator and control equipment, where the manipulator comprises three arms, each of which is joined to pivot between a first and a second element. In the present parallel robot, the first element is fixed in space. The second element consists of a manipulated platform that supports a tool or similar. In the parallel robot, there takes place a relative displacement of the second element in relation to the first element with the second element retaining its orientation/inclination. A tool is normally used when the robot is to pickup and move items between two positions/places. For picking up, the usual need is for the robot to be able to move quickly. Another need is normally that the moveable element/tool retains its orientation in space during the movement

Today, the most widely used robots for moving and rotating objects without changing the inclination of the object, are those of the so-called SCARA type. These robots are manufactured for the four degrees of freedom x, y, z and the rotating of objects around the z-axis. Two serially coupled arms that operate in the xy-plane with axes at right angles to the xy -plane are used for manipulating the object in the xy -plane. To obtain a movement in the z-direction, a linear displacement device is used. This device can be located either after or before the serially coupled arms in the kinematic series chain of the robot. In the first case, the serially coupled arms must displace the driving means for the z-movement and in the second case the driving package for the z-movement must displace the serially coupled arms. The driving package for rotating of objects around the z-axis will always sit furthest out in the kinematic chain of the robot A so-called SCARA robot must be able to take up the torque.

Serial coupling the arms of a so-called SCARA robot means, just as with all other robots with serially coupled kinematic links, that the robot acquires a large moveable mass. In addition, the serial coupling means that the structure of the robot becomes weaker. Even the precision is adversely affected and large motor moments are required to achieve rapid displacements.

Document WO 9958301 shows a manipulator for the relative displacement of a first and second element. The manipulator comprises three link arrangements A, B and C that are connected between the two elements. The link arrangements A, B and C are driven by three power appliance arrangements 3, 4 and 5. The link arrangements comprise upper arm and lower arm components. The lower arm components are connected to the upper arm components 6, 7 and 8 respectively to the second element by means of joint arrangements. The axes of rotation of the joint arrangements cut or coincide with an axis of symmetry (44) of the second element.

This arm structure has been made possible through the manipulated platform being designed as a frame construction in three dimensions and by the components of all three arms closest to the moveable platform consisting of two links for transferring compressing and pulling tensions from the manipulated platform.

Document WO 9733726 shows an industrial robot defined according to that above where the serial kinematic structure in the manipulator is replaced by a parallel kinematic structure. Three driving mechanisms are fitted with coinciding centres of rotation and each driving mechanism is joined with the moveable element in the form of a two dimensional platform via arms with five degrees of freedom. The components of the arms closest to the moveable platform comprise three, two or respectively one link and these links only need transfer compressing and pulling tensions, which causes them to be very rigid, even if they are designed with small dimensions and of lightweight material. In addition, the joins are only subjected to a normal force from the links and bearings can therefore be made light, rigid and precise. All driving mechanisms are mounted on the fixed element and as 2 or 3 of the driving mechanisms have a common centre axis, the whole robot structure can pivot round in the same manner as with a SCARA-robot.

Document US 4 976 582 shows a manipulator for the relative displacement of a first fixed and a second manipulated element where the second element maintains its orientation in space during the displacement. The manipulator comprises three arms, each of which is joined to pivot with both elements. Each of the arms is joined to pivot in the first element in single-axis joints. Each of the arms is also joined to pivot with the second element via link systems comprising two parallel links joined with elements in joints with at least three degrees of freedom. Thus, a total of all six links are joined to pivot with the second element. The aim is to set up a robot where the arms are arranged so that the second element always maintains its orientation in space and where the links are capable of transferring the torque.

When a robot according to that above is used in certain applications that demand high precision, e.g. measuring or processing material, the platform must be manufactured with great accuracy. In addition, the joints must be mounted on the platform with great accuracy and at the same time the angles of deflection of the joints must be made large.

Both the manipulator with a two dimensional platform and the manipulator with a three dimensional manipulator platform bring about the need for the platform to be manufactured with great accuracy as six joints each with 2 or 3 degrees of freedom are to be mounted on the manipulated platform.

With regard to material processing and other applications where large forces act on the platform, the platform must also be made rigid and the joints be given rigid attachments in the manipulator platform without compromising accuracy. During the application of a large external torque to the platform, the platform must additionally be made so large that the joint forces that arise do not lead to damage of the joint surfaces or the ball bearings. There is thus a need for a robot that eliminates twisting and vibrations in its construction. Furthermore, the robot should have a small moving mass to accommodate the desired cycle times.

When these factors are added together, the need arises for a manipulator that displays great accuracy during operation, has a large rigidity and at the same time is cheap and easy to manufacture.

When manufacturing and using industrial robots of the type specified above, the need thus arises for platforms that have a comparatively small extension in space, have a small moving mass and yet still have sufficient rigidity and high accuracy. They should have a minimal construction, simple and cheap attachment of the joints and yet still fulfil the demand for rigidity.

The manipulated platforms in the documents stated above cannot fulfil these requirements.

### DESCRIPTION OF THE INVENTION

The aim of the present invention is to arrange in a manipulator defined according to that above a manipulated platform that is designed with a minimal construction for the manipulated platform and with a simple attachment of the joints on the platform. Another aim is to give a fast robot with a large force that is capable of working with high precision in a large number of application areas. Another aim of the invention is to design a relatively cheap manipulator that will give a cheap and lightweight robot.

The solution according to the invention is characterised by the manipulator for the relative displacement of a body in space specified in claim 1. The manipulator comprises one element and at least three arms arranged to together displace an element in space with retained orientation/inclination. In addition, the manipulator comprises a first arm that comprises two parallel links that are attached to the element with joint arrangements allowing three degrees of freedom. Furthermore, the manipulator comprises a second arm that comprises two parallel links that are attached to the element with joint arrangements allowing three degrees of freedom. The joint arrangements are arranged on a common line of symmetry of the element.

The industrial robot in this present invention comprises a manipulator with control equipment. The manipulator is set up as a parallel robot with a number of arms, each of which is joined to pivot with a first and a second element. In the present parallel robot, the first element is fixed in space and the second element consists of a manipulated platform. The arms are arranged between the elements so that the second element retains its orientation/inclination in space during displacement. The arms consist of link systems comprising at least one link and joints in which the transfer of power takes place through pure compressing and pulling forces. The arms are built up of a first and a second arm part that are joined to pivot and that comprise single links, two or more parallel link arms or non-parallel multi-link systems. These allow movements between an actuator arm and a manipulated platform. The word "link" includes joint connections at the respective ends of the link.

The manipulator with the included link set ups and joint arrangements according to the invention is arranged in accordance with the subordinate claims. The arms are arranged so that all degrees of freedom of the manipulated element, apart from the pivoting around the axis of symmetry, can be locked. The words "lock a degree of freedom" are defined as follows. A body has six degrees of freedom, three for rotation and three for translation, and if one degree of freedom is locked, the body cannot move in that degree of freedom. The manipulator according to the invention comprises arms in the form of a first and a second arm part consisting of link set-ups. The words "link set-ups" are defined as a structure consisting of joined together links where the links are connected together with joints. The connecting together of the links can be both in series and in parallel.

The solution according to the invention also includes that the manipulator is produced according to the first independent method claim 15. The solution according to the invention even includes driving the manipulator and locking degrees of freedom according to the second independent method claim 21 as well as using the manipulator in high precision applications according to the independent use claim 23.

According to one advantageous embodiment of the invention, the included joints each have three degrees of freedom and only five links are joined with the second element with joints that are arranged on the second element so that every pivoting axis coincides with or cuts the common line of symmetry. In this way, all degrees of freedom except for the pivoting around the axis that is constituted by the line of symmetry are locked. This means that tools such as a measurement probe, for example, always maintain a pre-defined with a constant inclination while pivoting around the line of symmetry is indefinite.

Also included in the invention is that a tool is mounted symmetrically around the line of symmetry and thereby always carries out its task with the same precision. The invention also includes that the pivoting of the tool around the line of symmetry is locked through one joint being given only two degrees of freedom.

It is part of the invention that the individual joints consist of universal/cardan joints, homokinetic couplings or ball joints. In the latter case, a degree of freedom is added in the form of pivoting capability of the individual link around its length axis. For links arranged parallel, this extra degree of freedom does not mean any further freedom of movement for the manipulated element in relation to the fixed element when the robot is in its assembled state.

In one advantageous embodiment of the invention, the included joint arrangements are designed so that in the assembled state of the robot, they allow relative movement with at least two degrees of freedom. The movement takes place between the first arm part and the manipulated element. The degrees of freedom are given by the ability to pivot in all directions by a second arm part around two angled real or imaginary axes, both relative to the equivalent first arm part and the manipulated element. The individual joints consist of universal/cardan joints, homokinetic couplings or ball joints. In the latter case, a degree of freedom is added in the form of pivoting capability of the second arm part around its length axis, which, as mentioned earlier, adds a further degree of freedom of the manipulated element in relation to the fixed element when the robot is in its assembled state.

Included in the invention is that the links of the link pairs comprised in the second arms parts have the same length and are parallel. This means that the inclination/orientation of the manipulated element does not depend on its position.

Included in the invention is that the second element includes a threaded rod onto which joint balls provided with through-holes and distance elements in the form of tubes are threaded and fixed. The precision of the mounting of the balls is determined by the tube parts and not in the fitting of the rod in the ball hole. This gives high precision since the fitting depends only on the precision of the balls and the distance tubes. Both can be made with high precision at a low cost by, for example, using ball-bearing balls and distance tubes with face-ground end surfaces.

In one advantageous embodiment of the invention, arm C with its second arm part is arranged so that a link included in the arm part can pivot with large amplitude in all directions. The pivoting axes of the joint function cut or coincide with the axis of symmetry of the manipulated element. The centre of a constituent ball joint lies on the axis of symmetry of the manipulated element. To obtain the correct working area for the link associated with the joint, the attachment of the joint ball is arranged in the xy-plane in a direction towards the fixed element of the robot. In this way, both pivoting axes of the joint will be perpendicular to the axis of symmetry. Thus, a large working area for the robot is obtained since the joint function acquires a large space for swinging around the pivoting axes. The invention also includes that both of the pivoting axes named above cut the axis of symmetry.

In one advantageous embodiment of the invention, a joint arrangement comprises spring pre-tensioned ball joints where pulling springs are used to hold together joint sockets with joint balls. The manipulated element is designed to allow two link rod pairs with pairs of opposite joint sockets to be coupled in. Equivalent joint balls are arranged on the manipulated element via rods on the lower respective upper side of the joint balls so that the joint sockets can freely enclose the joint balls from the upper respective lower side. The joint sockets are then pressed against the respective joint ball with the pulling spring.

It is part of the invention to change the sequence between the joints arranged on the manipulated element. One embodiment with a certain sequence between the joints results in the forces along the manipulated element being more evenly distributed and thus giving a less rigid and accordingly lighter manipulated element compared with another embodiment with an alternative sequence between the joints.

In one advantageous embodiment of the invention, the arm C has a second arm part that is joined to pivot with a universal/cardan coupling at each end. A driving mechanism with the necessary transmission is arranged to pivot the universal/cardan coupling on the second arm part. By pivoting the universal/cardan coupling, the pivoting of the manipulated element is controlled and the rotational angle of a tool is manipulated. In accordance with embodiments described previously, the pivoting axes of all joints on the manipulated element coincide with or cut the axis of symmetry.

In one advantageous embodiment of the invention, the joints comprise triple-axis joints that are connected together to form a link set-up. One such joint has a single-axis bearing arranged with the pivoting axis in the z-direction. A further two single-axis bearings are arranged on either side of the first bearing with a common pivoting axis perpendicular to the pivoting axis of the first bearing. One embodiment of the invention has joints with three single-axis bearings arranged and, to obtain a symmetric loading of the bearings, pairs of links have been introduced.

According to another advantageous embodiment of the invention, the robot is arranged with a fourth arm D comprising a first arm part and a second arm part consisting of link set-ups and a fourth driving mechanism to control the angle of rotation of the manipulated element around its axis of symmetry.

Included in the concept of the invention is that the arms comprise translatory functioning arm parts.

In the embodiments described above, the manipulated element is manipulated relative to the fixed element with 3 or 4 degrees of freedom. Also included in the invention is the use of the described joint arrangements on the manipulated element to manipulate this relative to the fixed element with only two degrees of freedom In one advantageous embodiment, the robot has arm C connected with either arm A or arm B in the arms "AC" alternatively "BC", which locks the degree of freedom of the manipulated element that in the embodiments described above is manipulated via link set-up C.

Included in the invention is that the actual driving of the moving sections relative to the stationary sections at the driving mechanism is done via transmissions such as gearboxes, and hollow axles built into the fixed element. Also included in the invention is that other couplings are obtained between the pivoting mechanism through different transmission arrangements between the motors and the pivoting mechanism.

Also included in the invention is that two of the driving mechanisms either have or do not have pivoting axes that coincide. Two driving mechanisms having pivoting axes that coincide is to be prefered as the kinematics for pivoting the robot around are simplified.

Also included in the invention is that the tool rotates via an external power source with carriers.

Included in the invention is that the arms do not sit on a frame but that instead each sits on its own fixed point in space at a distance from one another. Also included in the invention is that the arms have different inclinations on the pivoting axes but have a common pivoting component.

This description should not be seen as a limitation of the invention but only as a guide to a full understanding of the invention. It must thus be considered that the manipulator can be mounted on a floor, wall or ceiling. The terms horizontal plane, over, under, etc., relate to different positions depending on how the manipulator is mounted, and over can thus become under, and so on. Adaptation to manipulators that include other active parts plus the replacement of parts and details that are obvious for a person skilled in the art can naturally be made within the concept of the invention.

### DESCRIPTION OF THE FIGURES

The invention will be described in more detail through the description of an embodiment with reference to the attached drawings where ,
**Fig. 1** shows a manipulator comprising three parallel arms connected to a first and a second element according to the invention,
**Fig. 2a** shows a first alternative embodiment of the manipulated platform according to the invention,
**Fig. 2b** shows a ball joint according to Fig. 2a,
**Fig. 3** shows a second alternative embodiment of the manipulated platform and associated joint arrangement according to the invention,
**Fig. 4** shows a third alternative embodiment of the manipulated platform and associated joint arrangement according to the invention,
**Fig. 5a** shows a fourth alternative embodiment of the manipulated platform and associated joint arrangement according to the invention,
**Fig. 5b** shows a ball joint according to Fig. 5a,
**Fig. 6** shows an alternative embodiment of joints that are included in the manipulated platform according to the invention,
**Fig. 7** shows a first alternative embodiment of the manipulator according to the invention arranged with a joint arrangement according to Fig. 6,
**Fig. 8** shows a second alternative embodiment of the manipulator according to the invention,
**Fig. 9** shows an embodiment where two of the arms according to Fig. 1 are joined together,
**Fig. 10** shows a second alternative embodiment with two arms according to Fig. 1 joined together.

### DESCRIPTION OF AN EMBODIMENT

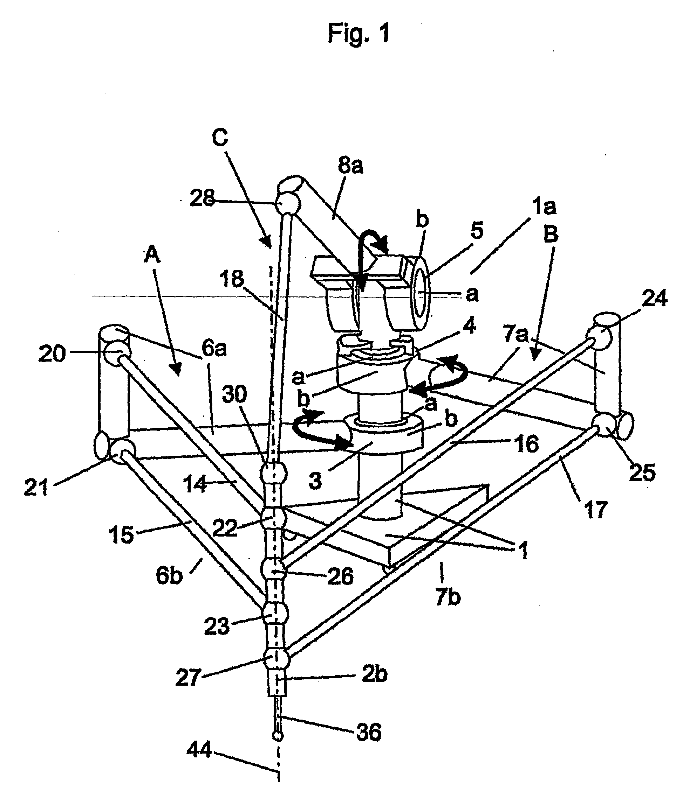

An industrial robot comprises a manipulator (**Fig. 1**) for the relative displacement of a first element 1 and a second manipulated element 2. The manipulator comprises three arms, A, B and C, that were and are arranged in parallel and that join together the first 1 and second 2 element. In this embodiment, the first element 1 is firmly attached to a frame. The second element 2 can be regarded as a platform 2 that, in this embodiment, consists of a rod-like element. Each one of the arms A, B and C respectively comprises partly a first arm part 6a, 7a respectively 8a and partly a second arm part 6b, 7b respectively 8b. The second arm part 6b consists of two parallel links 14 and 15, the second arm part 7b consists of two parallel links 16 and 17, and the second arm part 8b consists of one link 18.

The parallel links 14 and 15 respectively 16 and 17 have the same length and are parallel so that the inclination of the second element 2 shall not depend on its position.

The links 14 respective 15 included in the arm A are joined to pivot with the first arm part 6a at the joints 20 respectively 21 and with the platform 2 at the joints 22 respective 23.

The links 16 respectively 17 included in the arm B are joined to pivot with the first arm part 7a at the joints 24 respectively 25 and with the platform 2 at the joints 26 respectively 27.

The link 18 of the arm C is joined to pivot with the first arm part 8a at the joint 28 and with the platform 2 at the joint 30.

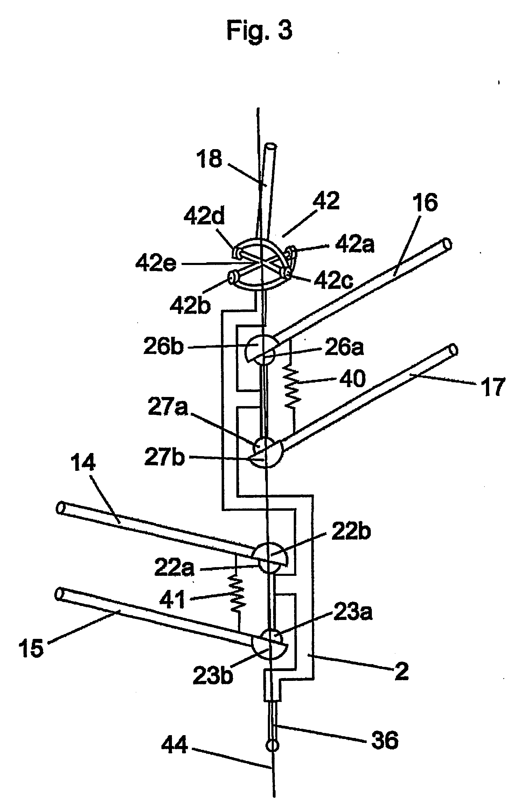

Here, the manipulated platform 2 consists of a rod-like element 2 that has a line of symmetry 44. The joints 22, 23, 26, 27 and 30 are arranged on the rod-like element. The joints 22, 23, 26, 27 and 30, which have three degrees of freedom, are arranged with every pivoting axis to coincide with or cut the common line of symmetry 44. This means that a tool such as a measurement probe 36, for example, always acquires a pre-defined position with a constant inclination while its pivoting around the line of symmetry 44 is indefinite. The measurement probe 36 is fitted symmetrically around the line of symmetry 44. **Fig. 3** shows that even the pivoting of the tool 36 around the line of symmetry 44 can be locked if the joint 30 is given only two degrees of freedom

Driving mechanisms 3, 4 and 5 are arranged to bring respective arms A, B and C into movement and to in this way achieve a relative displacement of the platform 2 in x, y and z directions in relation to the first element 1.

The driving mechanisms 3, 4 respectively 5 are arranged with a stationary section 3a, 4a respectively 5a as well as a section 3b, 4b respectively 5b that is moveable in relation to this. The driving mechanisms are designed as pivoting mechanisms, i.e. their moving parts 3b, 4b respectively 5b can pivot or rotate. The driving mechanisms 3 and 4 have their stationary sections 3a, 4a firmly attached to the first element 1. In Fig. 1, the fixed section 5a of the driving mechanism 5 is firmly attached to the pivotable part 4b of the driving mechanism 4. It is thus possible to pivot the whole of the robot structure around a column-shaped part 1a of the fixed element 1.

The assembled state of the manipulator allows relative movement with at the most two degrees of freedom between the first arm part 6a, 7a respectively 8a and the second element 2. For arm A, the degrees of freedom for swiveling in all directions are obtained from the links 14 and 15 around two angularly set-up real or imaginary axes both relative to the first arm part 6a and the second element 2. The joints 20, 21, 22 and 23 consist of ball joints, which give a degree of freedom in the form of pivoting capability at the individual links 14 and 15 around their length axes. One consequence of the parallel arranged links 14, 15 is that this additional degree of freedom does not give any additional freedom of movement at the second element 2 in relation to the first element 1 when the robot is in its assembled state.

The same conditions regarding ball joints apply for arm B. Two degrees of freedom for arm B are given by the pivoting capability in all directions of links 16 and 17 around two angularly set-up real or imaginary axes both relative to the first arm part 7a and the second element 2. The joints 24, 25, 26 and 27 consist of ball joints, which give a degree of freedom in the form of pivoting capability at the individual links 16 and 17 around their length axes. One consequence of the parallel arranged links 16, 17 is that this additional degree of freedom does not give any additional freedom of movement at the second element 2 in relation to the first element 1 when the robot is in its assembled state.

For arm C, ball joints 28 and/or 30 give a further degree of freedom at the first arm part 8a relative to the second element 2, namely pivoting capability around the line of symmetry 44 of the platform 2. Arm C requires that the link 18 be joined with the first arm part 8a by means of ball joint 28 and, with the aid of ball joint 30, joined to the second element 2. These joint arrangements are designed so that in the assembled state of the robot they allow relative movement with three degrees of freedom between the first arm part 8a and the second element 2. These degrees of freedom are given by a the pivoting capability in all directions of the link 18 around two angularly set-up real or imaginary axes both relative to the first arm part 8a and the second element 2, as well as a degree of freedom in the form of pivoting capability of link 18 around its length axis.

Driving mechanism 4 has its moving part 4b joined to the first arm part 7a on arm B so that the driving mechanism 4 is capable of imparting a swinging movement in the xy-plane to the first arm part 7a. In an equivalent manner, driving mechanism 3 has its moving part 3b joined to the first arm part 6a on arm A so that the driving mechanism 3 is capable of imparting a swinging movement in the xy -plane to the first arm part 6a. Both driving mechanisms 3 and 4 have pivoting axes that coincide, as shown in Fig. 1.

The main task of driving mechanism 5 is to give the second element 2 an upwards and downwards movement and the pivoting axis for driving mechanism 5 is thus at right angles to the pivoting axes for driving mechanisms 3 and 4. For the robot to be able to swing round the first element 1, the fixed part 5a is mounted on the driving mechanism 5 in such a manner that the pivoting axis of driving mechanism 5 accompanies the pivoting of any of the first arm parts 6a or 7a or is coupled to both the first arm parts 6a and 7a via a transmission so that the first arm part 8a always finds itself in the middle between the first arm parts 6a and 7a. In Fig. 1, the fixed part 5a of driving mechanism 5 is firmly attached to the moveable part 4b of driving mechanism 4.

The critical aspect in the design of the robot according to Fig. 1 is to obtain a joint arrangement for the joints 22, 23, 26, 27 and 30 so that all degrees of freedom of the second element 2 except for pivoting around the axis of symmetry 44 are locked by the links 14, 15, 16, 17 and 18. In the figure, the joints are arranged in the following order from the top downwards; 30, 22, 26, 23 and 27.

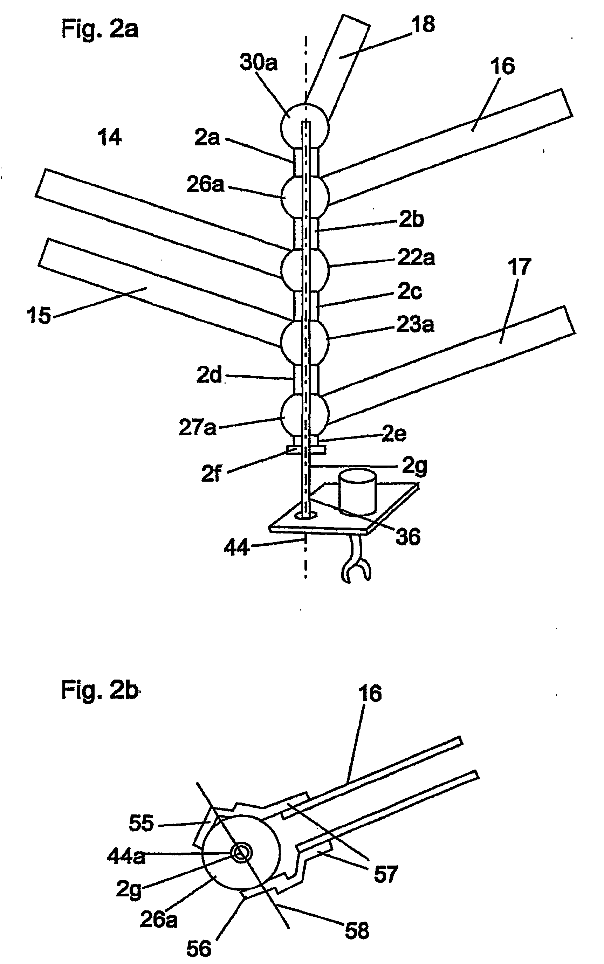

**Fig. 2a** shows an embodiment where the joints in the manipulator according to Fig. 1 are arranged according to an alternative sequence on the second element 2, namely 30, 26, 22, 23 and 27. All joints consist of ball joints where the respective joint balls 30a, 26a, 22a, 23a and 27a have been mounted through a threaded rod 2g with a nut 2f pulling together the joint balls and the distance tubes 2a, 2b, 2c, 2d and 2e that lie between them. At one of its ends, rod 2g is attached to joint ball 30a and passes freely through hole 44a that is made in the other joint balls. The tool 36 is mounted at the lower end of the rod 2g on an extra platform, which even supports an external driving source to rotate the tool.

The joint function can be obtained in a number of ways and Fig. 2b shows one example with a joint socket 55 and a holder-on 56. In Fig. 2b, joint ball 26a is seen from above and in the centre of the joint ball in this perspective there is the hole 44a for the rod 2g. The joint function is obtained through a joint socket 55, which abuts ball 26a at at least three points, being pressed firmly against the ball with a holder-on 56 that abuts the ball at at least one point. The joint socket and holder-on are mounted on link 16 with the aid of the holder 57 that is sprung to obtain a predefined force between the holder on and the joint socket. The joint according to Fig. 2b is also used for the joints 22a, 23a, and 27a.

Link 16 can pivot with large amplitude in all directions, and this is made possible by the joint function in Fig. 2b acquiring a large space for pivoting around the pivoting axes 58 and 2g. To obtain the correct working area for link 18, the attachment of joint ball 30a is arranged in the xy -plane in a direction towards the fixed element 1 of the robot, whereby both pivoting axes of the joint become perpendicular to the axis of symmetry 44. For the best function of the robot, both of these pivoting axes cut the axis of symmetry.

Fig. 3 shows a joint arrangement with pre-tensioned sprung ball joints, where pulling springs 40, 41 are used to hold ball sockets and ball joints together, constructed for the connection between the arms A respectively B and element 2. The second element 2 is designed to allow the connecting of the link rod pairs 14, 15 respectively 16, 17 with opposite pairs of joint sockets 22b, 23b respectively 26b, 27b. The joint balls 22a and 23b are arranged against the second element 2 via rods on the upper respective lower sides so that the joint sockets 22b respective 23b can freely enclose the joint balls 22a and 22b from the upper respective lower sides. The joint sockets are then pressed against the respective joint ball with the pulling spring 41. The equivalent arrangement is made for the link rods 16 and 17 where the joint sockets 26b respective 27b then press against the joint balls 26a respective 27a with the aid of spring 40.

For the complex designed second element 2 to acquire a well-defined orientation around its symmetry/rotation axis 44, the ball joint 30 in Fig. 1a is replaced by a universal/cardan coupling 42 that does not allow element 2 to rotate. Universal/cardan coupling 42 consists of the cross 42e that binds the pair of bearings 42a, 42b with the pair of bearings 42c, 42d mounted at right angles to them Link 18 is coupled to the pair of bearings 42c, 42d via an upper yoke, and the second element 2 is coupled to the pair of bearings 42a, 42b via a lower yoke.

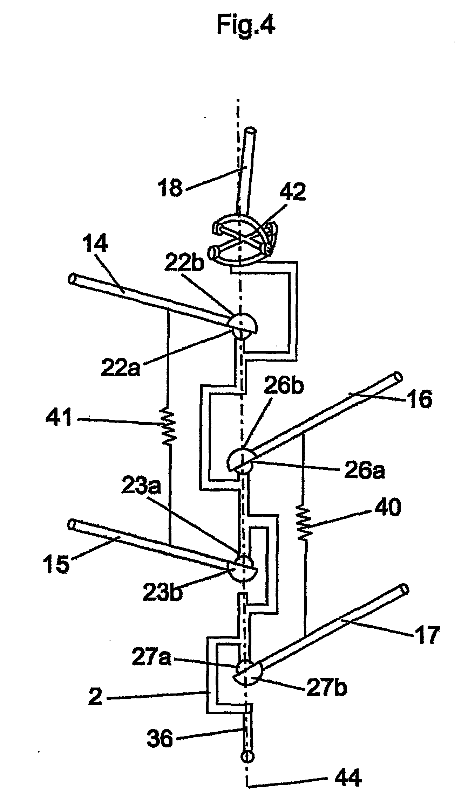

**Fig. 4** shows an alternative joint arrangement. The only difference with the arrangement shown in Fig. 3 is that the joints to the link pairs 14, 15 and 16, 17 have another sequence along the axis of rotation 44, namely the sequence that was used in Fig. 1a. As such, the joints now come in the order 22, 26, 23 and 27 in the direction towards the tool.

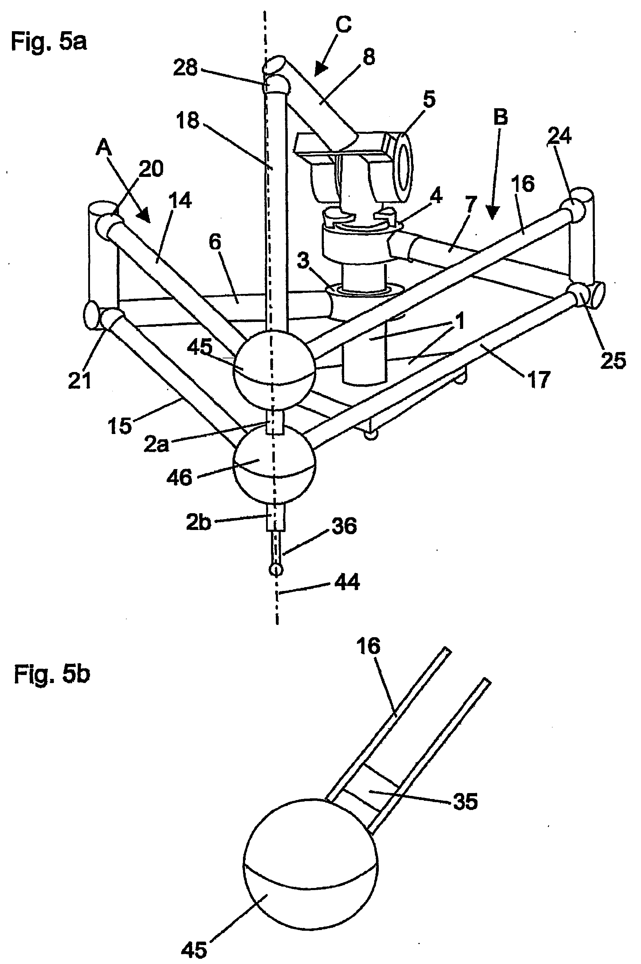

**Fig. 5a** shows an alternative joint arrangement where several link rods share the same joint ball. The joints 22, 26 and 30 in Fig. 1 share a first common relatively larger ball joint 45 in **Fig. 5a** and the joints 23 and 27 share a second common relatively larger ball joint 46. This means that the joint axes for the links 14, 16 and 18 cut one another at a common point that lies on the axis of symmetry 44 of the second element 2. In an equivalent manner, the joint axes for the links 15 and 17 cut one another at a common point that also lies on the line of symmetry 44. Joint balls 45, 46 and the tool 36 are arranged with the use of distance casings 2a and 2b and a threaded rod in the same manner as shown previously in Fig. 2a.

The joint function according to the joints 45 respectively 46 is shown in **Fig. 5b**. A magnet 35 holds firmly the end surface of link 16 against joint ball 45. In the same way, links 14 and 18 are arranged on joint ball 45 and links 15 and 17 are arranged on joint ball 46.

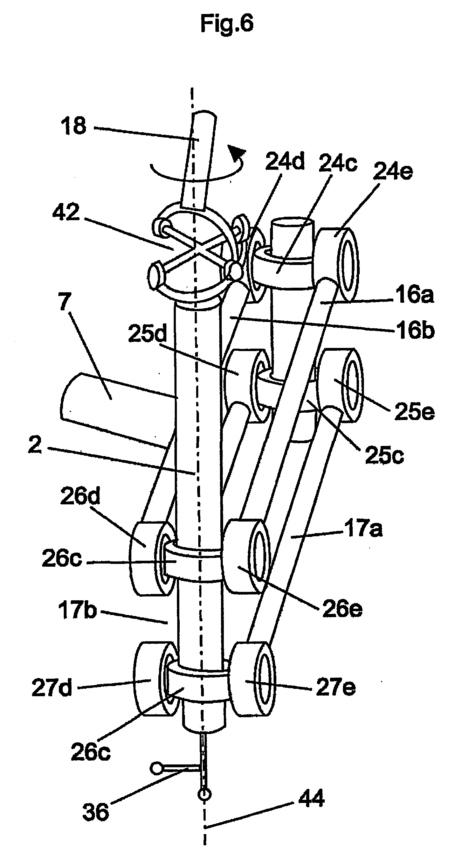

**Fig. 6** shows how single-axis bearings can be coupled together to form the second arm part 7b. The joint arrangements 24 and 25, which connect the first arm part 7a to the links 16 and 17, consist of 3 single-axis bearings 24a, 24b, 24c respectively 25a, 25b, 25c. The bearings 24c and 25c have a pivoting axis in the z-direction and are mounted on the part of the first arm part 7a that extends in the z-direction. On either side of the bearings 24c and 25c, bearings 24d, 24e, 25d, 25e are arranged with pairs of common pivoting axes at right angles to the pivoting axes for bearings 24c respectively 25c. The same bearing configuration is used to join links 16 and 17 to the second element 2 with joints 26 and 27. To obtain a symmetric loading of the bearings, link pairs 16a, 16b and 17a, 17b have been introduced. In the same manner as in Figs. 3 and 4, a universal/cardan coupling is used to join link 18 to element 2.

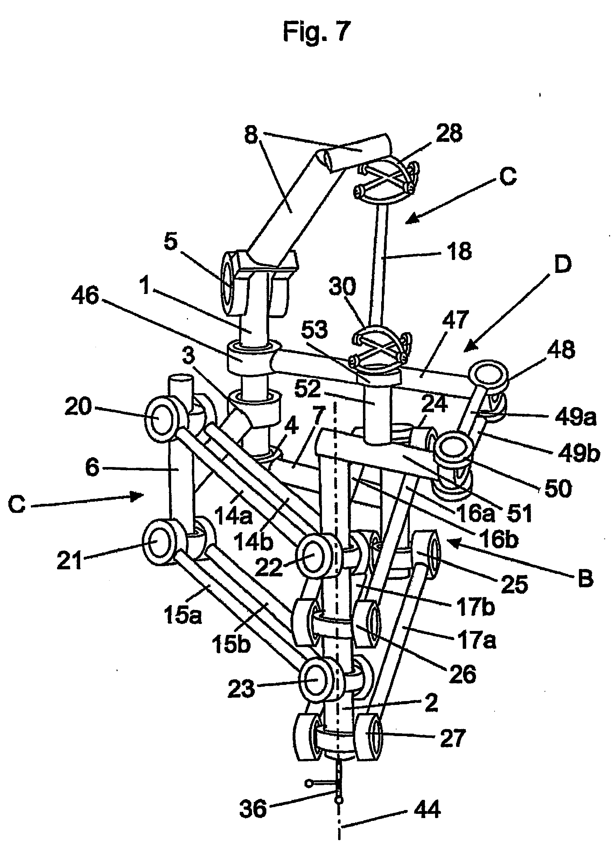

With the bearing arrangement for the second arm part shown in Fig. 6, a robot can be built up according to **Fig. 7**. The figure shows how both the arm parts 8a respectively 6a are arranged with the joint arrangement according to Fig. 6.

To steer the rotation angle of the second element 2 around its axis of symmetry 44, an additional arm D is joined to pivot with the first element in a single-axis joint in the form of a driving mechanism 46. The arm D comprises a first arm part 47, the parallel link 49 and the arm 51. The link 49 is joined to pivot with the first arm part 47 via the joint 48 and with the arm 51 via joint 50. The joints 48 and 50 are designed so that the link 49 can pivot in all directions relative to arm 47 and similarly can pivot in all directions relative to arm 51, which means that the joints 48 and 50 have at least 2 degrees of freedom. In **Fig. 7**, the same type of joint arrangement is used for joints 48 and 50 as is used for the joints 24, 25, 26, 27, 20, 21, 22 and 23 in fig. 6. This type of joint arrangement works for the arm D as long as the arms 47 and 51 pivot in the same plane.

The joints 28 respective 30 connect link 18 with the first arm part 8a respectively a part 52 of the second element 2 and are executed as universal/cardan couplings. For arm D to be able to pivot the second element 2 around the axis of symmetry 44, at least one of the universal/cardan joints is complemented with a bearing 53 so that the second element 2 can pivot relative to the first arm part 8a.

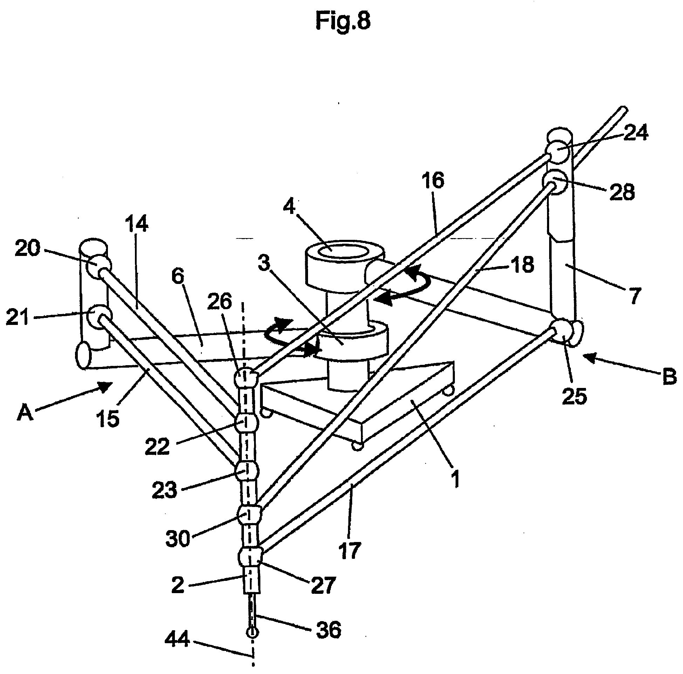

In Figs. 1-7, the second element 2 is manipulated relative to the first element 1 with three or four degrees of freedom However, it is also possible to carry out this manipulation 2 relative to the first element 1 with only two degrees of freedom, as is shown in **Fig. 8**.

Here, arm C is built together with arm B. The arm A is unchanged. B has been complemented with The link 18 from the arm C is arranged in the link system of the second arm part 7b between the parallel links 16 and 17. The link 18 is arranged diagonally between the first arm part 7a and the second element 2 via the joints 28 and 30 to lock the degree of freedom of the second element 2 that is manipulated via the arm C in Fig. 1. The length of the link 18 between the joints 28 and 30 is adjusted with a built-in adjustment device 28a. In this manner, the inclination of the second element 2 can be steered separately from the arms A and B.

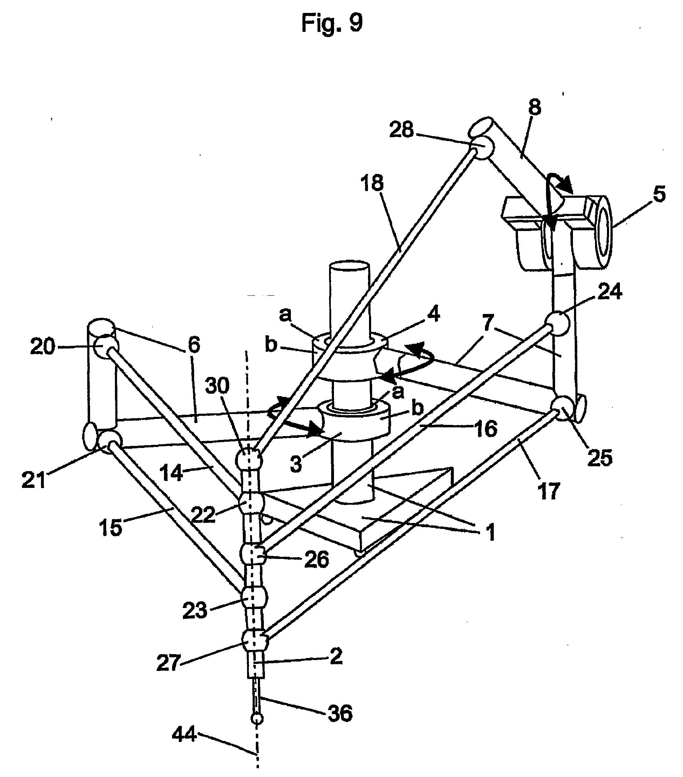

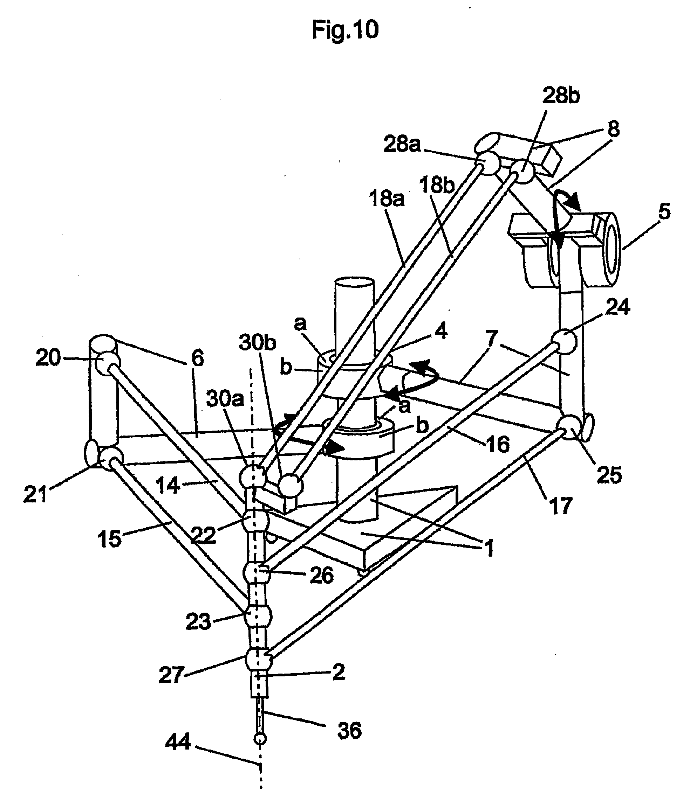

In **Fig. 9**, the pivoting mechanism 5 and thereby the attachment for the arm C has been moved and connected to the first arm part 7a. The second arm part 8a consists of a single link 18 joined to pivot with the second element 2 in the tripe-axis joint 30. **Fig. 10** shows a manipulator according to Fig. 9 where the single link 18 is replaced by the parallel links 18c and 18d. The manipulators according to Figs. 9 and 10 give a manipulation of the second element in only three degrees of freedom.

## Claims

1. Manipulator for displacing a body in space comprising: a manipulated element (2), at least three arms arranged to together displace the manipulated element (2) with retained inclination/orientation in space, whereby a first arm (A) comprises two first parallel links (14,15) that are attached to the manipulated element (2) with a first joint arrangement (22,23) allowing three degrees of freedom and whereby a second arm (B) comprises two second parallel links (16, 17) that are attached to manipulated element (2) with a second joint arrangement (26,27) allowing three degrees of freedom **characterised in that** the first and second joint arrangements (22,23,26,27) are arranged on a common line of symmetry (44) of the manipulated element (2).

2. Manipulator according to claim 1 **characterised in that** a third arm (C) comprises a third link (18) that is attached to the manipulated element (2) with a third joint arrangement (30, 45) allowing three degrees of freedom.

3. Manipulator according to claim 1 **characterised in that** a third arm (C) comprises a third link (18) that is attached to the manipulated element (2) with a third joint arrangement (42) allowing two degrees of freedom.

4. Manipulator according to claim 1 **characterised in that** a third arm (C) comprises two fifth parallel links (18a, 18b) that are attached to the manipulated element (2) with a joint arrangement (30a, 30b) allowing three degrees of freedom.

5. Manipulator according to any of the previous claims **characterised in that** the arms (A,B,C) each comprise an arm part (6a, 7a, 8a) that is attached to a fixed element (1) with a pivoting mechanism (3,4,5) allowing one degree of freedom.

6. Manipulator according to any of the previous claims **characterised in that** the fixed element (1) comprises a frame-like element (1 a).

7. Manipulator according to any of the previous claims 1 **characterised in that** the third arm (C) comprises an arm part (8a) that is attached to the second arm (B) with a pivoting mechanism (5) allowing one degree of freedom.

8. Manipulator according to any of the previous claims **characterised in that** each of the joint arrangements (22,23,26,27) has pivoting axes that coincide with or cut the axis of symmetry (44) of the manipulated element (2).

9. Manipulator according to claim 2 or 3 **characterised in that** the third joint arrangement (30, 30a, 42) is arranged on the line of symmetry (44) of the manipulated element (2).

10. Manipulator according to any of the previous claims **characterised by** triple-axis joint arrangements (22, 23, 26, 27, 30) comprising three single-axis bearings.

11. Manipulator according to any of the previous claims **characterised in that** a fourth arm (D) comprises two parallel links (49a, 49b) that are attached to the manipulated element (2) with a fourth joint arrangement (50).

12. Manipulator according to any of the previous claims **characterised in that** the manipulated element (2) comprises a rod-like element.

13. Manipulator according to claim 10 **characterised in that** the triple-axis joint arrangements (22,23,26,27,30) are pre-tensioned with a spring.

14. Manipulator according to any of the previous claims **characterised in that** at least one of the arms (A,B,C) comprises a translatory unit.

15. Method for manufacturing a manipulator comprising an manipulated element (2), at least three arms arranged to together displace the manipulated element (2) with retained inclination/orientation in space, whereby a first arm (A) comprises two first parallel links (14,15) that are attached to the manipulated element (2) with a first joint arrangement (22,23) allowing three degrees of freedom and whereby a second arm (B) comprises a two second parallel links (16,17) that are attached to the manipulated element (2) with a second joint arrangement (26,27) allowing three degrees of freedom **characterised in that** the first and second joint arrangements (22,23,26,27) are brought to be arranged on a common line of symmetry (44) of the manipulated element (2).

16. Method according to claim 15 **characterised in that** a third arm (C) comprises a third link (18) that is attached to the manipulated element (2) with a third joint arrangement (30, 45, 42).

17. Method according to claim 15 **characterised in that** the arms (A,B,C) are each brought to comprise an arm part (6a, 7a, 8a) that is attached with a pivoting mechanism (3,4,5) to a fixed element (1) allowing one degree of freedom.

18. Method according to claim 15 **characterised in that** two of arms (A,B) are each brought to comprise an arm part (6a, 7a) that is attached with the pivoting mechanism (3,4) allowing one degree of freedom to the fixed element (1).

19. Method according to claim 17 **characterised in that** the third arm (C) is brought to comprise an arm part (8a) that is attached with the pivoting mechanism (5) allowing one degree of freedom to arm (B).

20. Method according to any of the previous claims **characterised in that** the manipulated element (2) is pivoting around an axis that consists of the line of symmetry (44) and is brought to be carried out with an external power source.

21. Method for displacing a body in space by use of a manipulator comprising: an manipulated element (2), at least three arms arranged to together displace the manipulated element (2) with retained inclination/orientation in space, whereby a first arm (A) comprises two first parallel links (14,15) that are attached to the manipulated element (2) with a first joint arrangement (22, 23) allowing three degrees of freedom and whereby a second arm (B) comprises two second parallel links (16, 17) that are attached to manipulated element (2) with a second joint arrangement (26,27) allowing three degrees of freedom **characterised in that** during pivoting of the manipulator, the first and second joint arrangements (22,23,26,27) which are arranged on a common line of symmetry of the manipulated element, together lock five degrees of freedom at the axis that constitutes said line of symmetry (44) of the manipulated element (2).

22. Method according to claim 21 **characterised in that** a third arm (C) comprising a third link (18) attached to the manipulated element (2) with a third joint arrangement (42) allowing two degrees of freedom locks a sixth degree of freedom at the axis that constitutes the line of symmetry (44) of the manipulated element (2).

23. Use of a method according to claims 21-22 for high precision applications.

## Patentansprüche

1. Manipulator zur Bewegung eines Körpers im Raum, umfassend: ein manipuliertes Element (2), zumindest drei Arme, die angeordnet sind, um miteinander das manipulierte Element (2) mit unveränderter Neigung/Ausrichtung im Raum zu verlagern, wobei ein erster Arm (A) zwei erste parallele Glieder (14, 15) umfasst, welche an dem manipulierten Element (2) mit einer ersten Anschlussanordnung (22, 23) angefügt sind, die drei Freiheitsgrade gewährt, und wobei ein zweiter Arm (B) zwei zweite parallele Glieder (16, 17) umfasst, welche an dem manipulierten Element (2) mit einer zweiten Anschlussanordnung (26, 27) angefügt sind, die drei Freiheitsgrade gewährt, **dadurch gekennzeichnet, dass** die ersten und zweiten Anschlussanordnungen (22, 23, 26, 27) an einer gemeinsamen Symmetrielinie (44) des manipulierten Elements (2) angeordnet sind.

2. Manipulator gemäß Anspruch 1, **dadurch gekennzeichnet, dass** ein dritter Arm (C) ein drittes Glied (18) umfasst, welches an das manipulierte Element (2) mit einer dritten Anschlussanordnung (30, 45) angefügt ist, die drei Freiheitsgrade gewährt.

3. Manipulator gemäß Anspruch 1, **dadurch gekennzeichnet, dass** ein dritter Arm (C) ein drittes Glied (18) umfasst, welches an das manipulierte Element (2) mit einer dritten Anschlussanordnung (42) angefügt ist, die zwei Freiheitsgrade gewährt.

4. Manipulator gemäß Anspruch 1, **dadurch gekennzeichnet, dass** ein dritter Arm (C) zwei fünfte parallele Glieder (18a, 18b) umfasst, welche an dem manipulierten Element (2) mit einer Anschlussanordnung (30a, 30b) angefügt sind, die drei Freiheitsgrade gewährt.

5. Manipulator gemäß einem der vorhergehenden Ansprüche, **dadurch gekennzeichnet, dass** jeder der Arme (A, B, C) einen Armteil (6a, 7a, 8a) umfasst, der an einem fixierten Element (1) mit einer Schwenkmechanismus (3, 4, 5) angefügt ist, welche einen Freiheitsgrad gewährt.

6. Manipulator gemäß einem der vorhergehenden Ansprüche, **dadurch gekennzeichnet, dass** das fixierte Element (1) ein gehäuseähnliches Element (1a) umfasst.

7. Manipulator gemäß einem der vorhergehenden Ansprüche 1, **dadurch gekennzeichnet, dass** der dritter Arm (C) einen Armteil (8a) umfasst, der an den zweiten Arm (B) mit einem Schwenkmechanismus (5) angefügt ist, welcher einen Freiheitsgrad gewährt.

8. Manipulator gemäß einem der vorhergehenden Ansprüche, **dadurch gekennzeichnet, dass** jede Anschlussanordnung (22, 23, 26, 27) Schwenkachsen aufweist, welche sich mit der Symmetrieachse (44) des manipulierten Elements (2) überschneiden oder diese schneiden.

9. Manipulator gemäß Anspruch 2 oder 3, **dadurch gekennzeichnet, dass** die dritte Anschlussanordnung (30, 30a, 42) des manipulierten Elements (2) an der Symmetrieachse (44) angeordnet ist.

10. Manipulator gemäß einem der vorhergehenden Ansprüche, **gekennzeichnet durch** Anschlussanordnungen (22, 23, 26, 27, 30) mit dreifachen Achsen, welche Lager mit drei einzelnen Achsen umfassen.

11. Manipulator gemäß einem der vorhergehenden Ansprüche, **dadurch gekennzeichnet, dass** ein vierter Arm (D) zwei parallele Glieder (49a, 49b) umfasst, welche mit einer vierten Anschlussanordnung (50) an das manipulierte Element (2) angefügt sind.

12. Manipulator gemäß einem der vorhergehenden Ansprüche, **dadurch gekennzeichnet, dass** das manipulierte Element (2) ein stangenähnliches Element umfasst.

13. Manipulator gemäß Anspruch 10, **dadurch gekennzeichnet, dass** die Anschlussanordnungen (22, 23, 26, 27, 30) mit dreifachen Achsen mit einer Feder vorgespannt sind.

14. Manipulator gemäß einem der vorhergehenden Ansprüche, **dadurch gekennzeichnet, dass** zumindest einer der Arme (A, B, C) eine translatorisch bewegte Einheit umfasst.

15. Verfahren zur Herstellung eines Manipulators, umfassend ein manipuliertes Element (2), zumindest drei Arme, die angeordnet sind, um miteinander das manipulierte Element (2) mit unveränderter Neigung/Ausrichtung im Raum zu verlagern, wobei ein erster Arm (A) zwei erste parallele Glieder (14, 15) umfasst, welche an dem manipulierten Element (2) mit einer ersten Anschlussanordnung (22, 23) angefügt sind, die drei Freiheitsgrade gewährt, und wobei ein zweiter Arm (B) zwei zweite parallele Glieder (16, 17) umfasst, welche an dem manipulierten Element (2) mit einer zweiten Anschlussanordnung (26, 27) angefügt sind, die drei Freiheitsgrade gewährt, **dadurch gekennzeichnet, dass** die ersten und zweiten Anschlussanordnungen (22, 23, 26, 27) dazu gebracht werden, an einer gemeinsamen Symmetrielinie (44) des manipulierten Elements (2) angeordnet zu sein.

16. Verfahren gemäß Anspruch 15, **dadurch gekennzeichnet, dass** ein dritter Arm (C) ein drittes Glied (18) umfasst, welches an das manipulierte Element (2) mit einer dritten Anschlussanordnung (30, 45, 42) angefügt ist.

17. Verfahren gemäß Anspruch 15, **dadurch gekennzeichnet, dass** jeder der Arme (A, B, C) dazu gebracht wird, einen Armteil (6a, 7a, 8a) zu umfassen, der an ein fixiertes Element (1) mit einem Schwenkmechanismus (3, 4, 5) angefügt ist, welcher einen Freiheitsgrad gewährt.

18. Verfahren gemäß Anspruch 15, **dadurch gekennzeichnet, dass** zwei der Arme (A, B) dazu gebracht werden, einen Armteil (6a, 7a) zu umfassen, der mit einem Schwenkmechanismus (3, 4) angefügt ist, welcher dem fixierten Element einen Freiheitsgrad gewährt.

19. Verfahren gemäß Anspruch 17, **dadurch gekennzeichnet, dass** der dritte Arm (C) einen Armteil (8a) umfasst, der mit einem Schwenkmechanismus (5) angefügt ist, welcher dem Arm (B) einen Freiheitsgrad gewährt.

20. Verfahren gemäß einem der vorhergehenden Ansprüche, **dadurch gekennzeichnet, dass** das manipulierte Element um eine Achse schwenkt, welche aus der Symmetrielinie (44) besteht, und dass dies durch die Ausführung mit einer externen Kraftquelle zustande gebracht wird.

21. Verfahren zum Verlagern eines Körpers im Raum unter Verwendung eines Manipulators, umfassend: ein manipuliertes Element (2), zumindest drei Arme, die angeordnet sind, um miteinander das manipulierte Element (2) mit unveränderter Neigung/Ausrichtung im Raum zu verlagern, wobei ein erster Arm (A) zwei erste parallele Glieder (14, 15) umfasst, welche an dem manipulierten Element (2) mit einer ersten Anschlussanordnung (22, 23) angefügt sind, die drei Freiheitsgrade gewährt, und wobei ein zweiter Arm (B) zwei zweite parallele Glieder (16, 17) umfasst, welche an dem manipulierten Element (2) mit einer zweiten Anschlussanordnung (26, 27) angefügt sind, die drei Freiheitsgrade gewährt, **dadurch gekennzeichnet, dass** die ersten und zweiten Anschlussanordnungen (22, 23, 26, 27), die an einer gemeinsamen Symmetrielinie des manipulierten Elements angeordnet sind, während des Schwenkens des Manipulators miteinander an der Achse, welche die Symmetrielinie (44) des manipulierten Elements (2) festlegt, fünf Freiheitsgrade sperrt.

22. Verfahren gemäß Anspruch 21, **dadurch gekennzeichnet, dass** ein dritter Arm (C) ein drittes Glied (18) umfasst, welches an das manipulierte Element (2) mit einer dritten Anschlussanordnung (42) angefügt ist, die drei Freiheitsgrade gewährt, welche ein sechstes Freiheitsgrad an der Achse, welche die Symmetrielinie (44) des manipulierten Elements (2) festlegt, sperrt.

23. Verwendung des Verfahrens gemäß der Ansprüche 21 bis 22 für hoch präzise Anwendungen.

## Revendications

1. Manipulateur pour déplacer un corps dans l'espace comprenant : un élément manipulé (2), au moins trois bras agencés pour déplacer ensemble l'élément manipulé (2) avec une inclinaison/orientation retenue dans l'espace, un premier bras (A) comprenant deux premières liaisons parallèles (14, 15) qui sont reliées à l'élément manipulé (2) par une première articulation (22, 23) autorisant trois degrés de liberté et un deuxième bras (B) comprenant deux deuxièmes liaisons parallèles (16, 17) qui sont reliées à l'élément manipulé (2) par une deuxième articulation (26, 27) autorisant trois degrés de liberté, **caractérisé en ce que** les première et deuxième articulations (22, 23, 26, 27) sont placées sur un axe de symétrie commun (44) de l'élément manipulé (2).

2. Manipulateur selon la revendication 1, **caractérisé en ce qu'**un troisième bras (C) comprend une troisième liaison (18) qui est reliée à l'élément manipulé (2) par une troisième articulation (30, 45) autorisant trois degrés de liberté.

3. Manipulateur selon la revendication 1, **caractérisé en ce qu'**un troisième bras (C) comprend une troisième liaison (18) qui est reliée à l'élément manipulé (2) par une troisième articulation (42) autorisant deux degrés de liberté.

4. Manipulateur selon la revendication 1, **caractérisé en ce qu'**un troisième bras (C) comprend deux cinquièmes liaisons parallèles (18a, 18b) qui sont reliées à l'élément manipulé (2) par une articulation (30a, 30b) autorisant trois degrés de liberté.

5. Manipulateur selon l'une quelconque des revendications précédentes, **caractérisé en ce que** les bras (A, B, C) comprennent chacun une partie de bras (6a, 7a, 8a) qui est reliée à un élément fixe (1) par un mécanisme de pivotement (3, 4, 5) autorisant un degré de liberté.

6. Manipulateur selon l'une quelconque des revendications précédentes, **caractérisé en ce que** l'élément fixe (1) comprend un élément en forme de cadre (1a).

7. Manipulateur selon l'une quelconque des revendications précédentes, **caractérisé en ce que** le troisième bras (C) comprend une partie de bras (6a) qui est reliée au deuxième bras (B) par un mécanisme de pivotement (5) autorisant un degré de liberté.

8. Manipulateur selon l'une quelconque des revendications précédentes, **caractérisé en ce que** chacune des articulations (22, 23, 26, 27) a des axes de pivotement qui coïncident avec, ou coupent, l'axe de symétrie (44) de l'élément manipulé (2).

9. Manipulateur selon la revendication 2 ou 3, **caractérisé en ce que** la troisième articulation (30, 30a, 42) est placée sur l'axe de symétrie (44) de l'élément manipulé (2).

10. Manipulateur selon l'une quelconque des revendications précédentes, **caractérisé par** des articulations à trois axes (22, 23, 26, 27, 30) comprenant trois roulements à axe unique.

11. Manipulateur selon l'une quelconque des revendications précédentes, **caractérisé en ce qu'**un quatrième bras (D) comprend deux liaisons parallèles (49a, 49b) qui sont reliées à l'élément manipulé (2) par une quatrième articulation (50).

12. Manipulateur selon l'une quelconque des revendications précédentes, **caractérisé en ce que** l'élément manipulé (2) comprend un élément en forme de tige.

13. Manipulateur selon la revendication 10, **caractérisé en ce que** les articulations à trois axes (22, 23, 26, 27, 30) sont précontraintes par un ressort.

14. Manipulateur selon l'une quelconque des revendications précédentes, **caractérisé en ce qu'**au moins l'un des bras (A, B, C) comprend une unité de translation.

15. Procédé de fabrication d'un manipulateur comprenant un élément manipulé (2), au moins trois bras agencés pour déplacer ensemble l'élément manipulé (2) avec une inclinaison/orientation retenue dans l'espace, un premier bras (A) comprenant deux premières liaisons parallèles (14, 15) qui sont reliées à l'élément manipulé (2) par une première articulation (22, 23) autorisant trois degrés de liberté et un deuxième bras (B) comprenant deux deuxièmes liaisons parallèles (16, 17) qui sont reliées à l'élément manipulé (2) par une deuxième articulation (26, 27) autorisant trois degrés de liberté,
**caractérisé en ce que** les première et deuxième articulations (22, 23, 26, 27) sont positionnées pour être placées sur un axe de symétrie commun (44) de l'élément manipulé (2).

16. Procédé selon la revendication 15, **caractérisé en ce qu'**un troisième bras (C) comprend une troisième liaison (18) qui est reliée à l'élément manipulé (2) par une troisième articulation (30, 45, 42).

17. Procédé selon la revendication 15, **caractérisé en ce que** les bras (A, B, C) sont prévus pour comprendre chacun une partie de bras (6a, 7a, 8a) qui est reliée par un mécanisme de pivotement (3, 4, 5) à un élément fixe (1) autorisant un degré de liberté.

18. Procédé selon la revendication 15, **caractérisé en ce que** deux des bras (A, B) sont prévus pour comprendre chacun une partie de bras (6a, 7a) qui est reliée par le mécanisme de pivotement (3, 4) autorisant un degré de liberté à l'élément fixe (1).

19. Procédé selon la revendication 17, **caractérisé en ce que** le troisième bras (C) est prévu pour comprendre une partie de bras (8a) qui est reliée par le mécanisme de pivotement (5) autorisant un degré de liberté au bras (B).

20. Procédé selon l'une quelconque des revendications précédentes, **caractérisé en ce que** l'élément manipulé (2) pivote autour d'un axe qui est l'axe de symétrie (44) et est prévu pour être exécuté au moyen d'une source d'énergie extérieure.

21. Procédé pour déplacer un corps dans l'espace en employant un manipulateur comprenant : un élément manipulé (2), au moins trois bras agencés pour déplacer ensemble l'élément manipulé (2) avec une inclinaison/orientation retenue dans l'espace, un premier bras (A) comprenant deux premières liaisons parallèles (14, 15) qui sont reliées à l'élément manipulé (2) par une première articulation (22, 23) autorisant trois degrés de liberté et un deuxième bras (B) comprenant deux deuxièmes liaisons parallèles (16, 17) qui sont reliées à l'élément manipulé (2) par une deuxième articulation (26, 27) autorisant trois degrés de liberté, **caractérisé en ce que**, pendant le pivotement du manipulateur, les première et deuxième articulations (22, 23, 26, 27), qui sont placées sur un axe de symétrie commun de l'élément manipulé, bloquent ensemble cinq degrés de liberté au niveau de l'axe qui constitue ledit axe de symétrie (44) de l'élément manipulé (2).

22. Procédé selon la revendication 21, **caractérisé en ce qu'**un troisième bras (C) comprenant une troisième liaison (18) reliée à l'élément manipulé (2) par une troisième articulation (42) autorisant deux degrés de liberté bloque un sixième degré de liberté au niveau de l'axe qui constitue l'axe de symétrie (44) de l'élément manipulé (2).

23. Utilisation d'un procédé selon les revendications 21 et 22 pour des applications à haute précision.
